# EUROPÄISCHE PATENTSCHRIFT

(11) **EP 2 775 186 B1**
(45) Veröffentlichungstag und Bekanntmachung des Hinweises auf die Patenterteilung: **30.10.2019**
(21) Anmeldenummer: 14154605.1
(22) Anmeldetag: 11.02.2014
(51) Int. Cl.: F16L 33/04, F16L 23/08, F16B 33/02, F16B 39/30

(54) **Schelle**
Clamp
Collier de serrage

(30) Priorität: 06.03.2013 DE 102013003764
(43) Veröffentlichungstag der Anmeldung: 10.09.2014
(73) Patentinhaber: NORMA Germany GmbH, 63477 Maintal (DE)
(72) Erfinder: von Breitenbach, Gerrit, 63477 Maintal (DE); Heywood, Jonathan, 63477 Maintal (GB); Sakowski, Christian, 63477 Maintal (DE); Franke, Christian, 63477 Maintal (DE); Baudoin, Manuel, Newbury, RG19 6HW (GB); Riyahi, Farhad, Newbury, RG19 6HW (GB)
(74) Vertreter: Patentanwälte Olbricht Buchhold Keulertz

(56) Entgegenhaltungen:
- DE-U- 1 824 544
- GB-A- 244 662
- JP-A- H08 326 717
- US-A- 3 118 479
- US-A- 3 266 363
- US-A- 3 731 725

## Beschreibung

Die Erfindung betrifft eine Schraubverbindung, insbesondere für eine Schelle, mit einer Schraube, die einen Schraubenkopf und ein Außengewinde mit einem Gewindegangprofil und einer Gewindeachse aufweist, und einem Gegengewindeelement, dass ein an das Außengewinde angepasstes Innengewinde mit mindestens einer von Gewindeflanken begrenzten Gewindekerbe aufweist und in das die Schraube einschraubbar ist.

Ferner betrifft die Erfindung eine Schelle mit einem ringförmig ausgebildeten Schellenband, dass zwei Spannköpfe aufweist, die durch eine Schraubverbindung miteinander verbunden sind.

Die Erfindung wird im Folgenden anhand einer Spannschelle beschrieben. Sie ist jedoch auch bei anderen Anwendungsfällen anwendbar, z.B. bei einer Profilschelle.

Eine Spannschelle wird beispielsweise verwendet, um einen Schlauch auf einem Schlauchstutzen festzuspannen. Die hierfür notwendige Verringerung des Innendurchmessers des Schellenbandes wird dadurch bewirkt, dass man mit Hilfe der Schraubverbindung die beiden Spannköpfe aufeinander zubewegt. Hierzu wird die Schraube üblicherweise durch einen Spannkopf hindurchgeführt und in das Gegengewindeelement eingeschraubt, das im anderen Spannkopf angeordnet ist. Durch ein Drehen der Schraube im Gegengewindeelement wird die Schraube tiefer in das Gegengewindeelement hineinbewegt. Da der Schraubenkopf am anderen Spannkopf anliegt, werden auf diese Weise die beiden Spannköpfe aufeinander zubewegt. Dokument DE1824544U zeigt eine Spannschelle aus dem Stand der Technik.

Ein geometrisch bestimmter und damit reproduzierbarer Endmontagezustand des zu verschraubenden Gesamtsystems kann auf einfache Weise erreicht werden, wenn die beiden Spannköpfe zur Anlage aneinander gebracht werden. Dies ist jedoch nicht in allen Anwendungsfällen möglich oder erwünscht. In solchen Fällen verwendet man vielfach ein Zusatzbauteil, beispielsweise ein Zwischenelement oder ein Anschlagelement, das einen undefinierten Kraftnebenschluss erzeugt. Ein derartiges Zusatzbauteil macht jedoch die Montage aufwendiger.

Eine einfache Begrenzung der Einschraubbewegung der Schraube in das Gegengewindeelement auf eine vorbestimmte Anzahl von Umdrehungen der Schraube würde zwar möglicherweise den gewünschten Endmontagezustand erzeugen können, bei Veränderung des Gesamtsystems, beispielsweise durch ein thermisch bedingtes Setzverhalten von einigen Komponenten, wie den Schlauch, kann es jedoch vorkommen, dass die Schraubverbindung ihre Vorspannung verliert, so dass sich die Schraube bei möglichen Vibrationen selbstständig löst oder gar herausfällt.

Der Erfindung liegt die Aufgabe zugrunde, auf einfache Weise einen geometrisch reproduzierbaren Endmontagezustand einer Schraubverbindung zu erreichen.

Diese Aufgabe wird bei einer Schraubverbindung der eingangsgenannten Art dadurch gelöst, dass das Außengewinde in einer vorbestimmten Entfernung zum Schraubenkopf eine geometrisch bestimmte Deformation aufweist, die beim Einschrauben der Schraube in das Gegengewindeelement mit mindestens einer Gewindeflanke kollidiert.

Bei einer derartigen Ausgestaltung kann man die Schraube einfach in das Gegengewindeelement einschrauben. Sobald die Deformation das Gegengewindeelement erreicht und mit einer Gewindeflanke kollidiert, ist ein weiteres Einschrauben der Schraube in das Gegengewindeelement praktisch nicht mehr möglich. Die Deformation des Außengewindes bewirkt, dass das Außengewinde und das Innengewinde im Bereich der Deformation nicht mehr zusammen passen. Durch die Schraubbewegung der Schraube in das Gegengewindeelement hinein wird die Deformation allerdings noch etwas in das Innengewinde hineingedreht, so dass sich hier im einfachsten Fall eine Verklemmung zwischen der Schraube und dem Gegengewindeelement ergibt, die als zusätzliche Sicherung gegen ein ungewolltes Lösen der Schraube aus dem Gegengewindeelement, beispielsweise durch Vibrationen, verwendet werden kann. Wenn die Deformation auf eine Gewindeflanke des Innengewindes trifft, dann erhöht sich das zum Weiterdrehen der Schraube notwendige Drehmoment. Wenn ein maschinenbetriebenes Werkzeug zum Einschrauben der Schraube verwendet wird, dann kann man diese Drehmomenterhöhung verwenden, um ein Signal zu erzeugen, das das Werkzeug abschaltet und die Rotationsbewegung unterbricht. Dies ist für den Werker ein eindeutiges Signal dafür, dass der gewünschte Endmontagezustand der Schraubverbindung erreicht ist.

Vorzugsweise weist die Deformation mindestens zwei in Umfangsrichtung verteilt angeordnete Deformationsbereiche auf. Je mehr Deformationsbereiche vorgesehen sind, desto genauer kann der Endmontagezustand bestimmt werden. Bei einem Deformationsbereich, was grundsätzlich möglich ist, beträgt die Varianz bis zum Auftreffen der Deformation auf die Gewindeflanke des Innengewindes eine Umdrehung oder 360°. Bei zwei Deformationsbereichen wird einer der Deformationsbereiche mit einer Varianz von 180° Drehung der Schraube auf eine Gewindeflanke des Innengewindes treffen. Bei vier Deformationsbereichen sinkt die Varianz auf 90°, um die Kollision zu erzeugen.

Vorzugsweise sind mindestens zwei Deformationsbereiche bezogen auf die Gewindeachse diametral gegenüberliegend angeordnet. Dies erleichtert die Herstellung. Man kann von zwei diametral gegenüberliegenden Seiten auf das Außengewinde einwirken, um die Deformation zu erzeugen.

In einer besonders bevorzugten Ausgestaltung ist vorgesehen, dass die Deformation als eine Umformung ausgebildet ist. Die Deformation wird also nicht durch eine spanabhebende Verformung erzeugt, sondern ausschließlich umformtechnisch hergestellt. Bei einer Umformung wird kein Material entfernt, sondern es wird Material von einer Position in eine andere Position verlagert. Damit ist es auf einfach Weise möglich, eine Situation zu erzeugen, in der die Deformation beim Einschrauben der Schraube mit der Gewindeflanke des Gegengewindeelements kollidieren kann.

Hierbei ist bevorzugt, dass die Deformation als eine radiale Einformung des Gewindegangprofils ausgebildet ist. Das Gewindegangprofil wird also radial nach innen gepresst und verlagert sich dabei teilweise in axiale Richtung, teilweise in Umfangsrichtung, jeweils bezogen auf die Gewindeachse. Durch diese Materialverlagerung wird lokal eine Form des Gewindegangprofils erreicht, die nicht mehr mit dem Innengewinde des Gegengewindeelement zusammenpasst, so dass damit zwangsläufig eine Kollision zwischen der Gewindeflanke und dem Außengewinde an der vorbestimmten Position erreicht wird.

Vorzugsweise weist das Außengewinde eine Gewindetiefe auf und die Einformung weist eine radiale Tiefe auf, die mindestens 80% der Gewindetiefe entspricht. Die Einformung kann also etwa der Gewindetiefe entsprechen, so dass sie zumindest annähernd bis auf den Kern der Schraube geführt ist. Dadurch erreicht man eine ausreichende Widerstandfähigkeit der Deformation.

Vorzugsweise verläuft die Deformation im Wesentlichen parallel zu einer Senkrechten auf die Gewindeachse. Anders ausgedrückt verläuft die Deformation im Wesentlichen parallel zu einer Tangente an den Querschnitt des Außenumfangs des Außengewindes. Damit ist sichergestellt, dass die Deformation nicht der Gewindesteigung folgt, sondern das Gewindegangprofil schneidet.

Vorzugsweise weist das Außengewinde eine Steigung auf und die Deformation weist eine Breite auf, die mindestens 40% der Steigung entspricht. Anders ausgedrückt beträgt die Breite der Deformation etwa oder wenigstens die Hälfte der Steigung. Die Steigung ist die Strecke, um die die Schraube bei einer Umdrehung in das Gewindeelement hineinbewegt wird. Durch die Wahl der Breite ist sichergestellt, dass die Deformation ein Einschrauben der Schraube in das Gegengewindeelement über die Deformation hinaus zuverlässig verhindern kann.

Vorzugsweise sind das Außengewinde und das Innengewinde im Bereich der Deformation durch Fressen an mindestens einer Verbindungstelle miteinander verbunden. Wenn die Schraube mit einer gewissen Rotationsgeschwindigkeit in das Gegengewindeelement hineingedreht wird, kann man beim Auftreffen der Deformation auf das Innengewinde eine Flächenpressung erzeugen, die so hoch ist, dass eine Kaltverschweißung erfolgt. Dieses "Fressen", also die Kaltverschweißung, ist nicht reversibel und bietet eine relativ große Sicherheit gegen ein versehentliches Lösen der Schraube aus dem Gegengewindeelement.

Hierbei ist besonders bevorzugt, dass die Schraube und das Gegengewindeelement zumindest im Bereich von Außengewinde und Innengewinde Edelstahl aufweisen. Bei Edelstahl kann man ein derartiges Fressen oder Kaltverschweißen besonders zuverlässig realisieren.

Vorzugsweise ist die Deformation als Negativform einer Leiste ausgebildet. Dies erlaubt eine relativ einfache Herstellung der Schraube. Man muss die Leiste lediglich an der vorbestimmten Entfernung zum Schraubenkopf in das Außengewinde hineindrücken. Durch diesen Druck wird die gewünschte Umformung bewirkt.

Hierbei ist bevorzugt, dass die Negativform einen rechteckförmigen, runden, dreieckförmigen oder trapezförmigen Querschnitt aufweist. Durch all diese Formen wird in ausreichender Weise Material aus dem Gewindegangprofil so verdrängt, dass das Außengewinde der Schraube und das Innengewinde des Gegengewindeelements nicht mehr zusammenpassen und somit ein weiteres Drehen der Schraube im Gegengewindeelement blockiert wird.

Die Aufgabe wird bei einer Schelle der eingangs genannten Art dadurch gelöst, dass die Schraubenverbindung so wie oben beschrieben ausgebildet ist.

In diesem Fall kann man dafür sorgen, dass die beiden Spannköpfe am Ende der Montage, also im Endmontagezustand, einen vorbestimmten Abstand zueinander aufweisen und somit ein Innendurchmesser des Schellenbandes erreicht wird, der auf die gewünschte Einbausituation abgestimmt ist.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Spannschelle,
- Fig. 2: eine schematische Darstellung einer Schraube mit Normgewinde und
- Fig. 3: eine Schraube mit mehreren Beispielen einer Deformation und ein Gegengewindeelement.

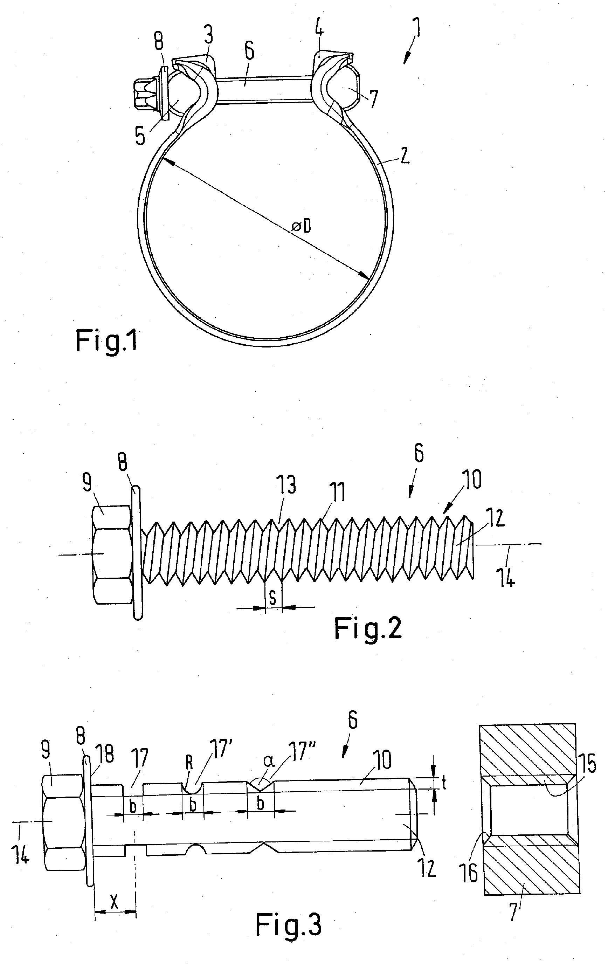

Fig.1 zeigt schematisch eine Spannschelle 1 mit einem ringförmig ausgebildeten Schellenband 2, das an seinen beiden Enden mit Spannköpfen 3, 4 versehen ist. Die Spannköpfe 3, 4 müssen nicht unbedingt exakt an den Enden des Schellenbandes 2 angeordnet sein.

Der Spannkopf 3 weist einen Zylinderbolzen 5 mit einer Durchgangsbohrung auf, durch die eine Schraube 6 geführt ist. Die Schraube 6 kann sich im Zylinderbolzen 5 frei drehen. Die Schraube 6 ist in ein Gegengewindeelement 7 eingeschraubt, das im zweiten Spannkopf 4 angeordnet ist. Die Schraube 6 weist einen Schraubenkopf 8 auf, der am Zylinderbolzen 5 anliegt. Eine derartige Verbindung der Spannköpfe ist natürlich auch bei einer anderen Schelle möglich, beispielsweise einer Profilschelle.

Das Schellenband 2 weist einen Innendurchmesser D auf. Wenn die Schraube 6 in das Gegengewindeelement 7 hineingeschraubt wird, dann werden die beiden Spannköpfe 3, 4 aufeinander zubewegt. Dadurch wird der Innendurchmesser D verkleinert.

Fig. 2 zeigt die Schraube 6 in einer vergrößerten Darstellung. Der Schraubenkopf 8 weist eine Drehmomentangriffsfläche 9 auf, beispielsweise in Form eines Außensechskants. Die Schraube 6 weist darüber hinaus ein Außengewinde 10 auf. Das Außengewinde 10 weist ein Gewindegangprofil 11 auf, das im vorliegenden Fall als schraubenlinienförmig umlaufende dreieckförmige Erhebung ausgebildet ist, die um einen Schraubenkern 12 herum verläuft. Zwischen einzelnen Gängen des Gewindegangprofils 11 sind Gewindekerben 13 ausgebildet. Das Außengewinde 10 ist in den meisten Fällen eingängig ausgebildet. Es kann jedoch auch mehrgängig ausgebildet sein. Die Schraube 6 weist darüber hinaus eine Gewindeachse 14 auf, um die die Schraube 6 gedreht wird, wenn die Schraube 6 in das Gegengewindeelement 7 eingeschraubt wird.

Das Außengewinde 10 weist eine Steigung s auf, die einem Abstand zwischen zwei Spitzen des Gewindegangprofils 11 entspricht. Die Steigung s ist die Strecke, um die sich die Schraube 6 bei einer Umdrehung in das Gegengewindeelement 7 hinein bewegt.

Fig. 3 zeigt in schematisierter Form noch einmal die Schraube 6 mit weiteren Einzelheiten. Es ist zu erkennen, dass das Außengewinde 10 eine Gewindetiefe t aufweist. Die Gewindetiefe t ist vereinfacht ausgedrückt der Abstand zwischen dem Außenumfang des Schraubenkerns 12 und dem Außenumfang des Gewindegangprofils 11.

In entsprechender Weise weist das Gegengewindeelement 7 ein Innengewinde 15 auf. Das Innengewinde 15 ist an das Außengewinde 10 angepasst, d. h. es weist die gleiche Steigung s und den gleichen nominalen Gewindedurchmesser auf. Das Innengewinde 15 weist in an sich bekannter und daher nicht näher dargestellter Weise eine schraubenlinienförmig geführte Gewindekerbe auf, die von Gewindeflanken begrenzt ist. Ferner weist das Innengewinde 15 zumindest an seinem der Schraube 6 zugewandten Ende einen Einlaufbereich 16 auf. Der Einlaufbereich 16 ist hier etwa konisch ausgebildet. Im Einlaufbereich 16 nimmt die Tiefe der Gewindekerbe des Innengewindes 15 allmählich zu. Die Länge des Einlaufbereichs 16 parallel zur Gewindeachse 15 beträgt vielfach das Einbis Dreifache der Steigung s.

In manchen Fällen möchte man erreichen, dass der Innendurchmesser D des Schellenbandes 2 auf einen vorbestimmten Wert verringert wird, bei dem die beiden Spannköpfe 3, 4 noch nicht zur Anlage aneinander gekommen sind.

Um in diesem Fall einen geometrisch bestimmten und damit reproduzierbaren Endmontagezustand des Gesamtsystems aus Schellenband 2, Spannköpfen 3, 4, Schraube 6 und Gegengewindeelement 7 zu erreichen, ist die in Fig. 2 dargestellte Schraube 6 modifiziert worden, wie dies aus Fig. 3 zu erkennen ist.

Die Schraube 6 weist in einer vorbestimmten Entfernung x vom Schraubenkopf 8 eine geometrisch bestimmte Deformation 17 auf.

In Fig. 3 sind entlang der Schraubenachse 14 drei Deformationen 17, 17', 17" dargestellt. Diese Darstellung wurde aus Gründen der Einfachheit gewählt, um unterschiedliche Formen der Deformationen 17, 17', 17" zu zeigen. Tatsächlich weist eine derartige Schraube 6 nur eine einzige Deformation 17 auf.

Die Deformation 17 wird durch eine Umformung des Gewindegangprofils 11 des Außengewindes 10 erzeugt, also nicht durch eine spanabhebende Formgebung. Bei einer derartigen Umformung wird ein Teil des Gewindegangprofils 11 verdrängt und in Umfangsrichtung und gegebenenfalls auch in axiale Richtung an eine andere Position verlagert, so dass das Außengewinde 10 im Bereich der Deformation 17 nicht mehr mit dem Innengewinde 15 zusammen passt. Die Schraube 6 lässt sich also nur soweit in das Gegengewindeelement 7 hineinschrauben, bis die Deformation 17 den Einlaufbereich 16 des Innengewindes 15 erreicht und dort mit einer oder mehreren Gewindeflanken des Innengewindes 15 kollidiert.

Diese Kollision hat zumindest zwei Auswirkungen. Zum einen ist ein weiteres Einschrauben der Schraube 6 in das Gegengewindeelement 7 nicht mehr möglich. Die Deformation blockiert eine weitere Drehung. Zum anderen verkeilt oder verklemmt sich die Deformation 17 im Innengewinde 15, so dass sie nur schwer oder in manchen Fällen gar nicht mehr lösbar ist.

Dies gilt insbesondere dann, wenn die Schraube 6 mit einem motorbetriebenen Werkzeug, beispielsweise einem Schrauber, in das Gegengewindeelement 7 hineingeschraubt wird. In diesem Fall trifft die Deformation 17 mit einer gewissen Geschwindigkeit auf die Gewindeflanke des Innengewindes 15, so dass sich eine erhebliche Flächenpressung ergibt, bevor die Rotationsbewegung der Schraube 6 vollständig aufgehört hat.

In einer besonders bevorzugten Ausgestaltung sind die Schraube 6 und das Gegengewindeelement 7 aus Edelstahl gebildet, jedenfalls zumindest im Bereich des Außengewindes 10 und des Innengewindes 15. Edelstahl hat in diesem Zusammenhang den Vorteil, dass er zum "Fressen" neigt, d. h. es ergibt sich eine Art Kaltverschweißung, bei der ein Stoff-, Kraft- und Formschluss zwischen der Schraube 6 und dem Gegengewindeelement 7 entsteht, der sich nicht mehr durch Vibrationen lösen lässt. Die Schraube 6 wird damit verliersicher im Gegengewindeelement 7 gehalten. Das "Fressen" erzeugt eine Verbindungsstelle, die sich vorzugsweise im Einlaufbereich 16 befindet. Auch dann, wenn sich die Deformation 17 im Innengewinde nur verklemmt, erfolgt dies vorzugsweise im Einlaufbereich 16.

Wie oben erwähnt setzt die Schraube 6 einer Drehbewegung einen erhöhten Widerstand entgegen, wenn die Deformation ausreichend weit in den Einlaufbereich 16 des Innengewindes 15 hineingeschraubt worden ist und die Drehbewegung damit aufhören sollte, weil der geometrisch gewünschte Endmontagezustand erreicht wird. Diese Widerstandserhöhung kann bei einem motorbetrieben Schraubwerkzeug erfasst werden, um ein Signal zu erzeugen, dass die weitere Drehung der Schraube 6 durch das motorbetriebe Werkzeug beendet. Dies ist für den Werker ein eindeutiges Zeichen dafür, dass die Schraube 6 weit genug in das Gegengewindeelement 7 hineingedreht worden ist.

Prinzipiell reicht es aus, wenn die Deformation 17 einen Deformationsbereich aufweist, der an der vorbestimmten Entfernung x angeordnet ist. Die vorbestimmte Entfernung x bezieht sich hier auf den Abstand zwischen der Mitte der Deformation 17 parallel zur Gewindeachse 14 und einer Anschlagfläche 18 am Schraubenkopf 8.

In vielen Fällen ist es jedoch von Vorteil, wenn die Deformation 17 mindestens zwei Deformationsbereiche aufweist, wie dies in Fig. 3 dargestellt ist. Bei einem Deformationsbereich in Umfangsrichtung wird ein Blockieren der Drehbewegung der Schraube 6 im Gegengewindeelement 7 irgendwann während einer vollständigen Umdrehung erfolgen. Bei zwei Deformationsbereichen benötigt man nur noch eine halbe Umdrehung, um eine Blockierung der Drehbewegung zu bewirken. Bei vier Deformationen 17 ist entsprechend nur noch eine 90°-Drehung notwendig, bevor eine Blockierung erfolgt.

Zweckmäßigerweise sind zwei Deformationsbereiche der Deformation 17 bezogen auf die Gewindeachse 14 diametral gegenüberliegend angeordnet. In diesem Fall kann man beispielsweise mit einer Presse von den beiden diametral gegenüberliegenden Seiten jeweils eine Leiste in das Außengewinde 10 einpressen, um die Deformation 17 durch Umformung des Gewindegangprofils 11 geometrisch definiert zu erzeugen.

Die Deformation 17 ist, wie dies in Fig. 3 zu erkennen ist, als radiale Einformung des Gewindegangprofils 11 ausgebildet. Die Deformation 17 verläuft dabei im Wesentlichen parallel zu einer Senkrechten auf die Gewindeachse und parallel zu einer Tangente an einen Querschnitt der Einhüllenden des Außengewindes 10. Da das Gewindegangprofil 11 mit einer gewissen Steigung zu der Tangente verläuft, ist damit sichergestellt, dass die Deformation 17 einen Teil des Gewindegangprofils 11 sozusagen "anschneidet", so dass mit großer Zuverlässigkeit gewährleistet ist, dass das Außengewinde 10 nicht mehr zum Innengewinde 15 passt.

Die Einformung entspricht etwa der Gewindetiefe t, d. h. sie entspricht etwa der Hälfte der Differenz zwischen dem Außendurchmessers des Außengewindes 10 und dem Außendurchmessers des Schraubenkerns 12. Die radiale Tiefe der Deformation 17 kann auch etwas kleiner sein. Sie sollte jedoch mindestens 80% der Gewindetiefe t betragen.

Die Deformation 17 weist eine Breite b auf, die mindestens etwa der Hälfte der Steigung s entspricht. Sie kann auch etwas kleiner sein, sollte jedoch mindestens 40% der Steigung s betragen. Die Breite b kann auch größer sein und sogar ein Vielfaches der Steigung s betragen.

Wie oben ausgeführt, ist die Deformation 17 als Negativform einer Leiste ausgebildet, die sich dadurch ergibt, dass die Leiste in das Außengewinde 10 hineingedrückt wird. Damit ist die Deformation 17 geometrisch definiert.

Wie in Fig. 3 zu erkennen ist, kann diese Negativform verschiedene Querschnitte aufweisen. So hat die Deformation 17 einen etwa rechteckförmigen Querschnitt. Die Deformation 17' hat einen runden, insbesondere kreisförmigen Querschnitt, dessen Radius R beträgt. Die Deformation 17" hat einen dreieckförmigen Querschnitt mit einem Winkel a, der vorzugsweise als stumpfer Winkel oder als Winkel, der vom Flankenwinkel des Außengewindes 10 abweicht, ausgebildet ist. Alternativ kann man auch eine trapezförmige oder trapezoidförmige Querschnittsform verwenden. Andere Querschnittsformen, wie oval oder vieleckig, sind möglich.

Mit einer derartigen Deformation 17 (oder 17', 17") kann die Schraube 6 nur bis zu einer gewissen Tiefe in das Gegengewindeelement 7 hineingeschraubt werden. Diese Tiefe wird durch den Abstand x zwischen der Deformation 17 und der Anschlagfläche 18 des Schraubenkopfes 8 bestimmt. Sobald die Deformation 17 auf die Flanken des Innengewindes 15 trifft, ist eine weitere Drehbewegung der Schraube 6 im Gegengewindeelement 7 nicht mehr möglich und es ergibt sich darüber hinaus ein Verklemmen oder sogar ein "Fressen", so dass die Schraube 6 mit einer "Verliersicherung" im Gegengewindeelement 7 gehalten ist.

## Patentansprüche

1. Schelle (1) mit einem ringförmig ausgebildeten Schellenband (2), das zwei Spannköpfe (3, 4) aufweist, die durch eine Schraubverbindung miteinander verbunden sind, wobei die Schraubverbindung eine Schraube (6), die einen Schraubenkopf (8) und ein Außengewinde (10) mit einem Gewindegangprofil (11) und einer Gewindeachse (14) aufweist, und ein Gegengewindeelement (7) aufweist, das ein an das Außengewinde (10) angepasstes Innengewinde (15) mit mindestens einer von Gewindeflanken begrenzten Gewindekerbe aufweist und in das die Schraube (6) einschraubbar ist, wobei eine Verringerung eines Innendurchmessers des Schellenbandes (2) dadurch bewirkt wird, dass mit Hilfe der Schraubverbindung die beiden Spannköpfe (3, 4) aufeinander zubewegt werden, wozu die Schraube (6) durch einen der Spannköpfe (3) hindurchgeführt und in das Gegengewindeelement (7) eingeschraubt wird, das im anderen der Spannköpfe (4) angeordnet ist, wobei die Schraube (6) durch ein Drehen der Schraube (6) im Gegengewindeelement (7) tiefer in das Gegengewindeelement (7) hineinbewegt wird und der Schraubenkopf (8) am anderen der Spannköpfe (3) anliegt, wodurch die beiden Spannköpfe (3, 4) aufeinander zubewegt werden, **dadurch gekennzeichnet, dass** das Außengewinde (10) in einer vorbestimmten Entfernung (x) zum Schraubenkopf (8) eine geometrisch bestimmte Deformation (17, 17', 17") aufweist, die beim Einschrauben der Schraube (6) in das Gegengewindeelement (7) mit mindestens einer Gewindeflanke kollidiert.

2. Schelle (1) nach Anspruch 1, **dadurch gekennzeichnet, dass** die Deformation (17, 17', 17") mindestens zwei in Umfangsrichtung verteilt angeordnete Deformationsbereiche aufweist.

3. Schelle (1) nach Anspruch 2, **dadurch gekennzeichnet, dass** mindestens zwei Deformationsbereiche bezogen auf die Gewindeachse (14) diametral gegenüberliegend angeordnet sind.

4. Schelle (1) nach einem der Ansprüche 1 bis 3, **dadurch gekennzeichnet, dass** die Deformation (17, 17', 17") als eine Umformung ausgebildet ist.

5. Schelle (1) nach Anspruch 4, **dadurch gekennzeichnet, dass** die Deformation (17, 17', 17") als eine radiale Einformung mindestens eines Gewindegangprofils (11) ausgebildet ist.

6. Schelle (1) nach Anspruch 5, **dadurch gekennzeichnet, dass** das Außengewinde (10) eine Gewindetiefe (t) aufweist und die Einformung eine radiale Tiefe aufweist, die mindestens 80% der Gewindetiefe (t) entspricht.

7. Schelle (1) nach einem der Ansprüche 1 bis 6, **dadurch gekennzeichnet, dass** die Deformation (17, 17', 17") im Wesentlichen parallel zu einer Senkrechten auf die Gewindeachse (14) verläuft.

8. Schelle (1) nach einem der Ansprüche 1 bis 7, **dadurch gekennzeichnet, dass** das Außengewinde (10) eine Steigung (s) aufweist und die Deformation (17, 17', 17") eine Breite (b) aufweist, die mindestens 40% der Steigung (s) entspricht.

9. Schelle (1) nach einem der Ansprüche 1 bis 8, **dadurch gekennzeichnet, dass** das Außengewinde (10) und das Innengewinde (15) im Bereich der Deformation (17, 17', 17") durch Fressen an mindestens einer Verbindungsstelle miteinander verbunden sind.

10. Schelle (1) nach Anspruch 9, **dadurch gekennzeichnet, dass** das Gegengewindeelement einen Einlaufbereich am Innengewinde aufweist und die Verbindungsstelle im Einlaufbereich angeordnet ist.

11. Schelle (1) nach Anspruch 9 oder 10, **dadurch gekennzeichnet, dass** die Schraube (6) und das Gegengewindeelement (7) zumindest im Bereich von Außengewinde (10) und Innengewinde (15) Edelstahl aufweisen.

12. Schelle (1) nach einem der Ansprüche 1 bis 11, **dadurch gekennzeichnet, dass** die Deformation (17, 17', 17") als Negativform einer Leiste ausgebildet ist.

13. Schelle (1) nach Anspruch 12, **dadurch gekennzeichnet, dass** die Negativform einen rechteckförmigen, runden, ovalen, dreieckförmigen, vieleckförmigen oder trapezförmigen Querschnitt aufweist.

14. Schelle (1) nach einem der Ansprüche 1 bis 11, **dadurch gekennzeichnet, dass** die Spannköpfe (3, 4) an den beiden Enden des Schellenbands (2) angeordnet sind, wobei einer der Spannköpfe (3) einen Zylinderbolzen (5) mit einer Durchgangsbohrung aufweist, durch die die Schraube (6) geführt ist und in der sich die Schraube (6) im Zylinderbolzen (5) frei drehen kann, wobei der Schraubenkopf (8) am Zylinderbolzen (5) anliegt, wobei das Gegengewindeelement (7) im zweiten Spannkopf (4) angeordnet ist, und wobei der Innendurchmesser (D) dadurch verkleinert wird, dass die beiden Spannköpfe (3, 4) aufeinander zubewegt werden, wenn die Schraube (6) in das Gegengewindeelement (7) hineingeschraubt wird.

## Claims

1. Clamp (1) having an annularly embodied clamp band (2), which has two tensioning heads (3, 4) connected to one another by a screw connection, wherein the screw connection has a screw (6), which has a screw head (8) and an external thread (10) with a thread turn profile (11) and a thread axis (14), and a mating thread element (7) having an internal thread (15) adapted to the external thread (10), with at least one thread groove which is bordered by thread flanks and into which the screw (6) can be screwed, wherein a reduction in the internal diameter of the clamp band (2) is caused by the two tensioning heads (3, 4) being moved towards each another using the screw connection, for which purpose the screw (6) is led through one of the tensioning heads (3) and screwed into the mating thread element (7) which is arranged in the other of the tensioning heads (4), wherein the screw (6) is moved deeper into the mating thread element (7) through a rotation of the screw (6) in the mating thread element (7) and the screw head (8) abuts on the other of the tensioning heads (3), whereby the two tensioning heads (3, 4) are moved towards each another, **characterised in that** the external thread (10) has a geometrically determined deformation (17, 17', 17") at a predetermined distance (x) from the screw head (8), which deformation collides with at least one thread flank during the screwing of the screw (6) into the mating thread element (7).

2. Clamp (1) according to claim 1, **characterised in that** the deformation (17, 17', 17") has at least two deformation regions arranged in a circumferential direction in a distributed manner.

3. Clamp (1) according to claim 2, **characterised in that** at least two deformation regions are arranged to diametrically oppose each other in relation to the thread axis (14).

4. Clamp (1) according to any of claims 1 to 3, **characterised in that** the deformation (17, 17', 17") is embodied as a shaping.

5. Clamp (1) according to claim 4, **characterised in that** the deformation (17, 17', 17") is embodied as a radial indentation of at least one thread turn profile (11).

6. Clamp (1) according to claim 5, **characterised in that** the external thread (10) has a thread depth (t) and the indentation has a radial depth which corresponds to at least 80% of the thread depth (t).

7. Clamp (1) according to any of claims 1 to 6, **characterised in that** the deformation (17, 17', 17") runs substantially parallel to a line perpendicular to the thread axis (14).

8. Clamp (1) according to any of claims 1 to 7, **characterised in that** the external thread (10) has a pitch (s) and the deformation (17, 17', 17") has a width (b) which corresponds to at least 40% of the pitch (s).

9. Clamp (1) according to any of claims 1 to 8, **characterised in that** the external thread (10) and the internal thread (15) are connected to one another by seizing at at least one connection point in the region of the deformation (17, 17', 17").

10. Clamp (1) according to claim 9, **characterised in that** the mating thread element has a lead-in region on the internal thread and the connection point is arranged in the lead-in region.

11. Clamp (1) according to claim 9 or 10, **characterised in that** the screw (6) and the mating thread element (7) have, at least in the region of the external thread (10) and internal thread (15), stainless steel.

12. Clamp (1) according to any of claims 1 to 11, **characterised in that** the deformation (17, 17', 17") is embodied as a negative shape of a ridge.

13. Clamp (1) according to claim 12, **characterised in that** the negative shape has a rectangular, round, oval, triangular, polygonal or trapezoidal cross section.

14. Clamp (1) according to any of claims 1 to 11, **characterised in that** the tensioning heads (3, 4) are arranged at both ends of the clamp band (2), wherein one of the tensioning heads (3) has a cylinder pin (5) with a through-hole, through which the screw (6) is led and in which the screw (6) can rotate freely in the cylinder pin (5), wherein the screw head (8) abuts on the cylinder pin (5), wherein the mating thread element (7) is arranged in the second tensioning head (4), and wherein the internal diameter (D) is reduced by the two tensioning heads (3, 4) being moved towards each another when the screw (6) is screwed into the mating thread element (7).

## Revendications

1. Collier (1) muni d'une bande de collier annulaire (2) présentant deux têtes de serrage (3, 4) reliées l'une à l'autre par une liaison à vis, dans lequel la liaison à vis présente une vis (6) présentant une tête de vis (8) et un filetage extérieur (10) muni d'un profil de filetage (11) et d'un axe de filetage (14), et un élément à filetage complémentaire (7) présentant un filetage intérieur (15), adapté au filetage extérieur (10) et muni d'au moins une entaille de filetage limitée par des flancs de filetage, et au sein duquel la vis (6) peut être vissée, dans lequel une réduction d'un diamètre intérieur de la bande de collier (2) est provoquée en rapprochant les deux têtes de serrage (3, 4) l'une de l'autre au moyen de la liaison à vis, la vis (6) étant pour cela guidée à travers l'une des têtes de serrage (3) et vissée dans l'élément à filetage complémentaire (7) qui est agencé dans l'autre des têtes de serrage (4), dans lequel la vis (6) est enfoncée plus profondément dans l'élément à filetage complémentaire (7) par une rotation de la vis (6) dans l'élément à filetage complémentaire (7) et la tête de vis (8) vient en butée au niveau de l'autre des têtes de serrage (3), ce qui rapproche les deux têtes de serrage (3, 4) l'une de l'autre, **caractérisé en ce que** le filetage extérieur (10) présente, à une distance prédéterminée (x) de la tête de vis (8), une déformation (17, 17', 17") géométriquement déterminée qui se heurte à au moins un flanc de filetage lors du vissage de la vis (6) dans l'élément à filetage complémentaire (7).

2. Collier (1) selon la revendication 1, **caractérisé en ce que** la déformation (17, 17', 17") présente au moins deux régions de déformation agencées réparties dans la direction circonférentielle.

3. Collier (1) selon la revendication 2, **caractérisé en ce qu'**au moins deux régions de déformation sont agencées de manière diamétralement opposée par rapport à l'axe de filetage (14).

4. Collier (1) selon l'une quelconque des revendications 1 à 3, **caractérisé en ce que** la déformation (17, 17', 17") est réalisée sous la forme d'un remodelage.

5. Collier (1) selon la revendication 4, **caractérisé en ce que** la déformation (17, 17', 17") est réalisée sous la forme d'une empreinte radiale d'au moins un profil de filetage (11).

6. Collier (1) selon la revendication 5, **caractérisé en ce que** le filetage extérieur (10) présente une profondeur de filetage (t) et l'empreinte présente une profondeur radiale qui correspond à au moins 80 % de la profondeur de filetage (t).

7. Collier (1) selon l'une quelconque des revendications 1 à 6, **caractérisé en ce que** la déformation (17, 17', 17") s'étend de manière essentiellement parallèle à une droite perpendiculaire à l'axe de filetage (14).

8. Collier (1) selon l'une quelconque des revendications 1 à 7, **caractérisé en ce que** le filetage extérieur (10) présente un pas (s) et la déformation (17, 17', 17") présente une largeur (b) qui correspond à au moins 40 % du pas (s).

9. Collier (1) selon l'une quelconque des revendications 1 à 8, **caractérisé en ce que** le filetage extérieur (10) et le filetage intérieur (15) sont reliés l'un à l'autre dans la région de la déformation (17, 17', 17") grâce à des arrachements au niveau d'au moins un point de liaison.

10. Collier (1) selon la revendication 9, **caractérisé en ce que** l'élément à filetage complémentaire présente une région d'entrée au niveau du filetage intérieur et le point de liaison est agencé dans la région d'entrée.

11. Collier (1) selon la revendication 9 ou 10, **caractérisé en ce que** la vis (6) et l'élément à filetage complémentaire (7) présentent de l'acier inoxydable au moins dans la région du filetage extérieur (10) et du filetage intérieur (15).

12. Collier (1) selon l'une quelconque des revendications 1 à 11, **caractérisé en ce que** la déformation (17,17', 17") est réalisée sous la forme d'un moule négatif d'une baguette.

13. Collier (1) selon la revendication 12, **caractérisé en ce que** le moule négatif présente une section transversale rectangulaire, ronde, ovale, triangulaire, polygonale ou trapézoïdale.

14. Collier (1) selon l'une quelconque des revendications 1 à 11, **caractérisé en ce que** les têtes de serrage (3, 4) sont agencées aux deux extrémités de la bande de collier (2), dans lequel l'une des têtes de serrage (3) présente un boulon cylindrique (5) muni d'un alésage traversant à travers lequel la vis (6) est guidée et au sein duquel la vis (6) peut tourner librement dans le boulon cylindrique (5), dans lequel la tête de vis (8) vient en butée au niveau du boulon cylindrique (5), dans lequel l'élément à filetage complémentaire (7) est agencé dans la seconde tête de serrage (4), et dans lequel le diamètre intérieur (D) est réduit en rapprochant les deux têtes de serrage (3, 4) l'une de l'autre lorsque la vis (6) est vissée dans l'élément à filetage complémentaire (7).
